**Europäisches Patentamt**

(19) **European Patent Office**

**Office européen des brevets**

(11) Veröffentlichungsnummer: **0 037 498**
**B1**

(12) **EUROPÄISCHE PATENTSCHRIFT**

(45) Veröffentlichungstag der Patentschrift:
02.11.83

(51) Int. Cl.³: **B 01 D 46/06**

(21) Anmeldenummer: 81102107.0

(22) Anmeldetag: **20.03.81**

(54) **Vorrichtung für Gewebefilter.**

(30) Priorität: **31.03.80 SE 8002440**

(43) Veröffentlichungstag der Anmeldung:
**14.10.81 Patentblatt 81/41**

(45) Bekanntmachung des Hinweises auf die Patenterteilung:
**02.11.83 Patentblatt 83/44**

(84) Benannte Vertragsstaaten:
**AT BE CH DE FR GB IT LI NL SE**

(56) Entgegenhaltungen:
**DE - A - 2 737 956**
**DE - A - 2 737 964**
**DE - A - 2 800 513**
**FR - E - 82 598**
**GB - A - 1 400 147**
**US - A - 3 870 495**
**US - A - 3 871 851**
**US - A - 4 135 900**

(73) Patentinhaber: **Fläkt Aktiebolag, Sickla Allé 13,
S-131 34 Nacka (SE)**

(72) Erfinder: **Berglund, Svante, Wieselgrensgatan 3,
S-36051 Hovmantorp (SE)**

(74) Vertreter: **Eitle, Werner, Dipl.-Ing. et al, Hoffmann. Eitle
& Partner Patentanwälte Arabellastrasse 4,
D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung für Gewebe, filter

Die vorliegende Erfindung betrifft eine Vorrichtung an Gewebefiltern gemäss dem Obergegriff des Anspruchs 1.

Gewebefilter vom Kassettentyp dienen zur Reinigung von Gasen von Staub. Das Filtermaterial ist bei ihnen in einen Kassettenrahmen eingespannt, der in ein Filtergehäuse eingesetzt wird. Das mit Staub durchsetzte Gas wird in eine Rohgaskammer eingeführt und durchströmt das Filtermaterial, wobei der Staub sich auf dessen Oberfläche absetzt. Das gereinigte Gas verlässt das Filtergehäuse über eine Reingaskammer, die für mehrere Filterkassetten angeordnet sein kann. Zwischen dem Kassettenrahmen und dem Filtergehäuse muss eine wirksame Dichtung vorhanden sein, damit alles Gas auf seinem Weg von der Rohgaskammer zur Reingaskammer durch das Filtermaterial hindurchgehen muss, und damit kein Rohgas ungefiltert in die Reingaskammer eindringt. Zur Erzielung einer wirksamen Filterfunktion muss der auf dem Filtermaterial angesammelte Staub regelmässig davon entfernt werden. Gemäss bekannter Technik geschieht dies durch Reinigung, die so ausgeführt werden kann, dass das Filtermaterial Rüttelbewegungen ausgesetzt wird, die gewöhnlich mit Hilfe von Druckimpulsen eines geeigneten Gases, gewöhnlich Luft, bewirkt werden. Das Filtermaterial ist während des Betriebes einem Verschleiss ausgesetzt, der je nach der Gasbelastung, der Staubkonzentration, der Staubart und dem Reinigungsverlauf unterschiedlich ist. Um eine richtige Arbeitsweise des Filters zu gewährleisten, muss deshalb das Filtermaterial regelmässig nachgesehen und bei Bedarf ausgewechselt werden. Es ist deshalb sehr wichtig, dass das Filtermaterial leicht nachgesehen und einfach und schnell ausgewechselt werden kann, damit die betroffene Filtersektion nicht für längere Zeit abgeschaltet zu werden braucht.

Textile Gewebe filter der vorstehend genannten Art sind in den DE-A Nrn. 2737956, 2737964 und 2800513 beschrieben. Die DE-A Nr. 2737956 betrifft das Festspannen des Filtermaterials am Rahmenteil des Kassettenrahmens, so dass die Reingasöffnungen der Filterbeutel ausgespannt gehalten werden, und zwischen dem Filtermaterial und dem Kassettenrahmen eine wirksame Dichtung erhalten wird. Die DE-A Nr. 2737964 zeigt Mittel, die zum Auspannen der Filterbeutel längs ihrer ganzen Länge erforderlich sind, damit offene Filterkanäle gebildet werden. Diese Mittel bestehen aus sowohl flachen Versteifungsgliedern, die in die Filterbeutel niedergesetzt werden, als auch aus Einspanngliedern zum einspannen des Filtermaterials an der Stirnwandstücken der Kassette. Diese bekannte Vorrichtung hat jedoch eine Reihe von Nachteilen. Es hat sich gezeigt, dass die erforderlichen Versteifungsglieder in den Filterkanälen relativ teuer in der Herstellung sind. Ausserdem machen sie die montierte Filterkassette verhältnismässig schwer, was bei Filterwechsel und Inspektion von Nachteil ist. Ausserdem sind relativ grosse Arbeitsmomente zum Montieren des Filtermaterials am bzw. vom Kassettenrahmen erforderlich, wenn das Filtermaterial an den Stirnwandstücken eingespannt und die Versteifungsglieder unter Anwendung erforderlich Aufspannkräfte angebracht werden sollen. Ein weiterer Nachteil bezüglich der Versteifungsglieder ist, dass sie den Reinigungsverlauf in gewissem Ausmass stören können.

Die vorliegende Erfindung hat die Aufgabe, die den bekannten Filtern anhaftenden Nachteile zu vermindern und einen Gewebefilter der angegebenen Art zu schaffen, der billiger in der Herstellung, leichter in seiner Konstruktion und einfacher in der Handhabung beim Auswechseln des Filtermaterials ist.

Diese Aufgabe wird durch eine Vorrichtung mit den im Anspruch 1 definierten Kennzeichen gelöst. Weitere Kennzeichen gehen aus den anschliessenden Unteransprüchen hervor. Die Erfindung liegt somit die Einsicht zugrunde, dass das Aufspannen der Filterbeutel auf eine einfache und wirksame Weise durch horizontale Versteifungselemente erhalten werden kann, denen nach ihrer Anbringung am Filtermaterial ihre endgültige Form gegeben wird, was auf einfache Weise geschieht, während gleichzeitig ein wirksames Aufspannen der Filterbeutel erhalten wird, obwohl in den Filterkanälen keine mehr oder weniger komplizierten Elemente angebracht sind. Die zusammenwirkenden Einspannmittel bewirken ferner ein schnelles und einfaches Montieren des Filtermaterials. Ein weiterer Vorteil des Erfindungsgegenstandes ist die Möglichkeit rationeller Herstellung des Filtermaterials. Die Erfindung ermöglicht beispielsweise, dass längs den Filterbeuteln laufende Nähte oder Leimstränge völlig oder teilweise in Fortfall kommen können. Ferner können bekannte Befestigungen des Filtermaterials am Rahmenteil des Kassettenrahmens ausgenutzt werden, beispielsweise durch die Vorrichtung gemäss der DE-A Nr. 2737956 oder durch eine andere bekannte, geeignete Vorrichtung, die hier nicht näher beschrieben zu werden braucht. Zur Montage des Kassettenrahmens im Filtergehäuse kann die Vorrichtung gemäss genannter DE-A Nr. 2800513 angewendet werden.

Es ist zwar bereits durch die US-A Nrn. 3870495 und 3871851 bekannt, längliche Versteifungselemente auf der Oberfläche von Filtermaterialien anzubringen. Da dort die Filtermaterialien von völlig anderer Art als die Filterbeutel beim Erfindungsgegenstand sind, konnten sie die Erfindung nicht nahegelegt haben.

Die Erfindung wird nachstehend unter Bezugnahme auf die beigefügten Zeichnungen näher beschrieben:

Fig. 1 zeigt eine Filterkassette schräg von unten gesehen;

Fig. 2 zeigt ein zickzackförmiges Versteifungselement;

Fig. 3 zeigt ein bogenförmiges Versteifungselement;

Fig. 4 ist ein Schnitt durch das Filtermaterial mit durch Befestigungsstreifen angebrachtem Versteifungselement;

Fig. 5 ist ein Schnitt durch das Filtermaterial mit durch Leimung angebrachtem Versteifungselement;

Fig. 5a zeigt eine Seitenansicht des Filtermaterials mit Befestigungsstreifen;

Fig. 6 zeigt die Einspannung des Filtermaterials am Bodenbalken des Kassettenrahmens;

Fig. 7 zeigt die Einspannung des Filtermaterials am Stirnwandteil des Kassettenrahmens;

Fig. 8 zeigt die Befestigung des Bügels am Filtermaterial;

Fig. 9 zeigt ein Filtergehäuse;

Fig. 10 zeigt ein Druckelement zum Aufweiten der Filterbeutel in Seitenansicht;

Fig. 11 ist ein Schnitt durch das in einen Filterbeutel eingesetzte Druckelement im Querschnitt;

Fig. 12 ist ein Schnitt durch eine andere Ausführung des Druckelementes, eingesetzt in einen Filterbeutel, im Querschnitt.

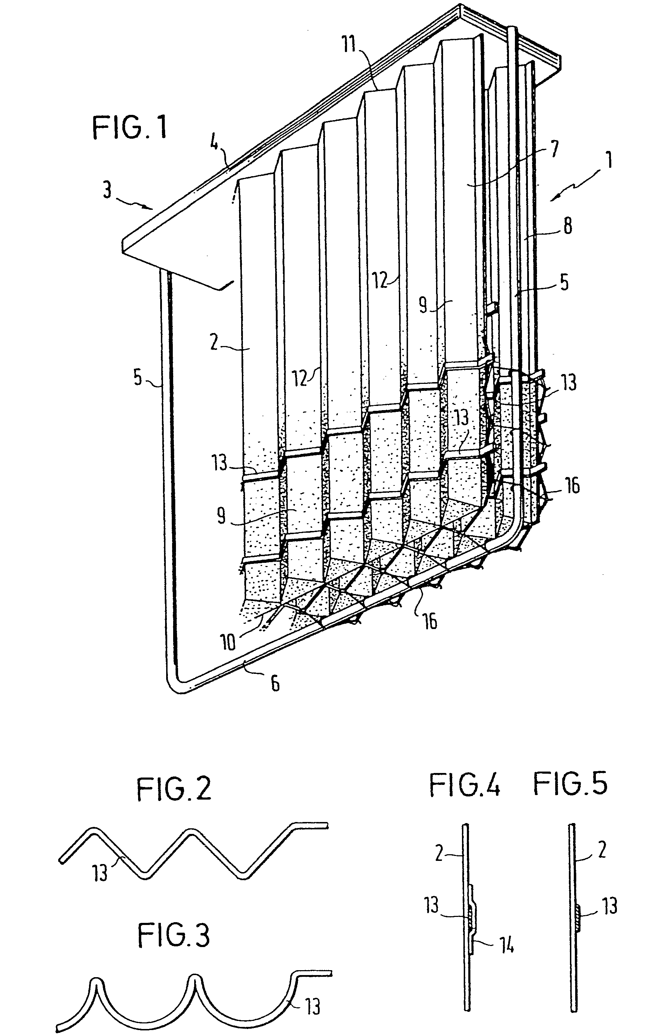

Fig. 1 zeigt einen Kassettenfilter 1, bei dem das Filtermaterial 2 in einen Kassettenrahmen 3 eingespannt ist, der aus einem Rahmenteil 4, Stirnwandteilen 5 und einem Bodenbalken 6 besteht. Das Filtermaterial 2 ist hier mit zwei Reihen 7,8 von Filterbeuteln 9 ausgebildet, die an ihrem unteren Ende 10 geschlossen und an ihrem oberen Ende 11 im Rahmenteil 4 aufgespannt sind. Diese Aufspannung ist in der Figur nur schematisch dargestellt, da sie auf verschiedene Weise ausgebildet sein kann, jedoch so, dass die Filterkanäle aufgespannt gehalten werden und zwischen Rahmenteil, Filtermaterial und Filtergehäuse eine Dichtung erhalten werden kann. Die Filterbeutel sind mit längslaufenden Nähten 12 oder Fugen anderer Art versehen, um angrenzende Filterkanäle voneinander abzugrenzen. Diese Nähte brauchen jedoch nicht durchgehend zu sein, und sie können auch völlig entfallen. Längs den Filterreihen sind auf beiden Seiten der Filterbeutel und über deren gesamte Höhe verteilt horizontal verlaufende Versteifungselemente 13 angeordnet. In Fig. 1 sind nur vier Versteifungselemente im unteren Bereich der Filterbeutel gezeigt. Die beiderseitigen Versteifungselemente liegen nicht einander gegenüber sondern sind zueinander höhenversetzt, wie die Zeichnung zeigt. Hiedurch kann ihre Ausbildung auf besonders einfache Weise geschehen. In der Zeichnung sind sie auf der Aussenseite des Filtermaterials, d.h. auf der Rohgasseite, angebracht. Sie können aber auch auf der Reingasseite angeordnet werden. Gemäss der Erfindung werden sie auf dem Filtermaterial in etwa geradlinig gestreckter Form angebracht, um dann durch ein Biegeverfahren oder auf andere, später beschriebene Weise ihre gezeigte endgültige Form zu erhalten.

Diese endgültige Form kann zickzackförmig (Fig. 2) oder wellenförmig (Fig. 3) sein. Es sind auch andere dazwischenliegende Formen möglich, um durch sie den Filterbeuteln eine entsprechende Gestalt zu geben.

Fig. 4 zeigt, wie die Versteifungselemente mit Hilfe von Befestigungsstreifen oder -bändern 14 angeordnet sein können, die ihrerseits durch Nähte oder Leimung am Filtermaterial 2 angebracht sind.

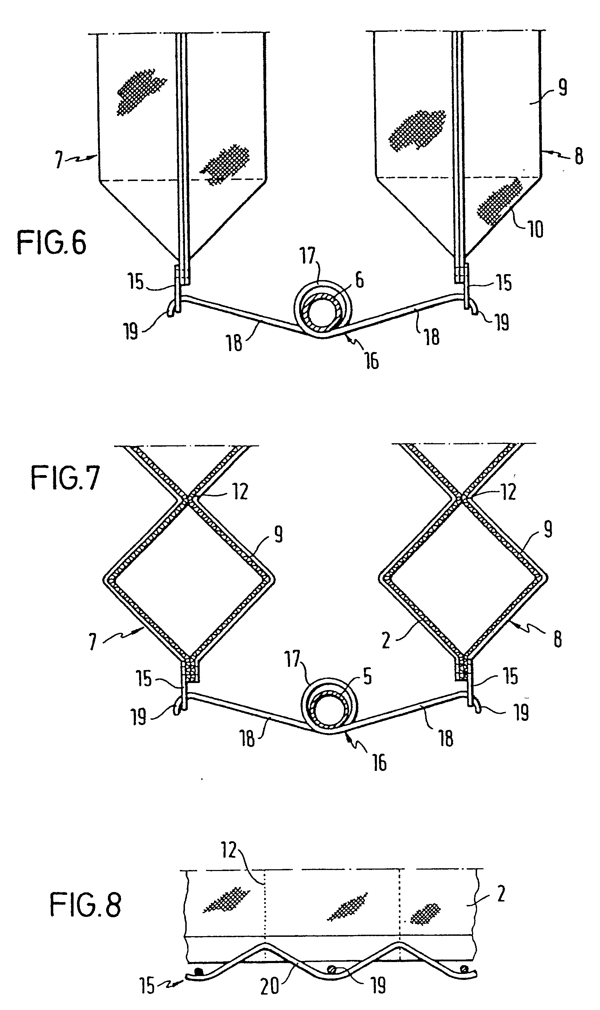

Bei dem in Fig. 5 gezeigten Ausführungsbeispiel sind die Versteifungselemente 13 an das Filtermaterial 2 angeleimt. Dabei haben die Versteifungselemente rechteckigen Querschnitt. Ihre Dicke beträgt vorzugsweise zwischen 1 und 3 mm, und ihre Breite zwischen 5 und 15 mm, je nachdem, aus welchem Material sie gefertigt sind. Bei Herstellung aus Metall ist 1,5×8 mm eine besonders geeignete Abmessung.

Wie sich aus Fig. 5a ergibt, besitzen die Befestigungsstreifen bzw. -bänder 14 über den Nähten 12 Löcher 14a, um die Nähte kontinuierlich bilden zu können.

Fig. 6 zeigt beispielhaft die Befestigung der Filterreihen 7,8 mit Hilfe von Einspannmitteln am Bodenbalken 6, wobei das untere Ende 10 der Filterbeutel 9 geschlossen und mit Befestigungsösen 15 versehen ist, deren Ausbildung nachstehend näher beschrieben wird. Eine Spange 16 umgreift mit einem Mittelauge 17 den Bodenbalken 6 und sitzt mit zwei federnden Armen 18 mit Hakenenden 19 in den Befestigungsösen 15. Das Anbringen der Spangen 16 ist dank der federnden Arme sehr einfach, und die Konstruktion gewährleistet eine sehr effektive Fixierung und Einspannung des Filtermaterials.

In Fig. 7 sind entsprechende Spangen 16 am Stirnwandteil 5 gezeigt. Die Filterbeutel 9 sind hier im Querschnitt gezeigt, und die übrigen Teile sind dieselben wie in Fig. 6. Die Spangen 16 sind vorzugsweise aus Drahtmaterial gefertigt und so bemessen, dass sie geeignete Steifigkeit und Federkraft haben.

Die Ausbildung der Befestigungsösen 15 geht aus Fig. 8 hervor, wo ein Teil des Filtermaterials 2 gezeigt ist. Längs der Kante des Filtermaterials ist am Wendepunkt der Nähte 12 ein Band 20 am Filtermaterial befestigt. Die Hakenteile 19 werden um das Band 20 gehakt.

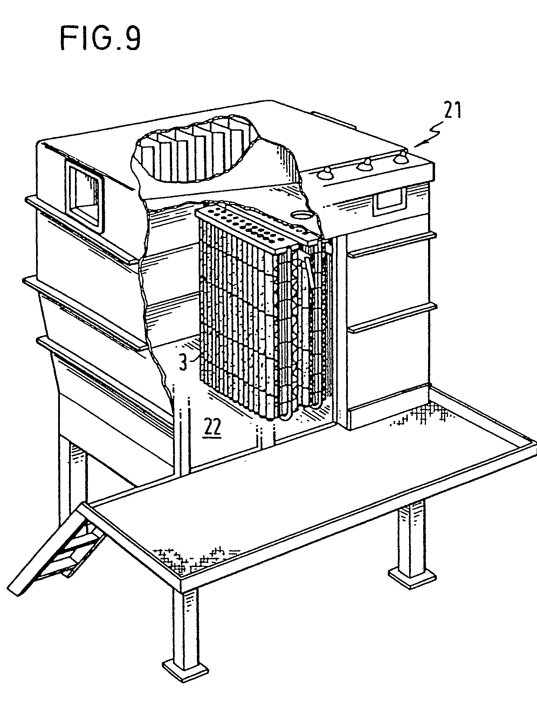

Fig. 9 zeigt ein Filtergehäuse 21, in welchem der Kassettenrahmen 3 in die Rohgaskammer 22 eingesetzt ist, die dichtend an die Reingaskammer des Filtergehäuses angeschlossen ist.

Die Konstruktion des Filtergehäuses ergibt sich aus der Zeichnung. Es mag lediglich erwähnt sein, dass die Filterkassette mit dem montierten Filtermaterial dank der Erfindung ein niedriges Gewicht hat, was beim An- und Abmontieren der Filterkassette am bzw. vom Filtergehäuse von grossem Vorteil ist.

Nachstehend wird beschrieben, wie das Filtermaterial am Kassettenrahmen anmontiert bzw. von ihm abmontiert wird. Vor der Montage am Kassettenrahmen werden die Ausspannglieder am Filtermaterial 2 angebracht. Da diese beim Anbringen aus geraden Stangen bestehen, ist ihre Anbringung am Filtermaterial sehr einfach, sei es, dass sie in durch am Filtermaterial angebrachte Bänder gebildete Schlauchhüllen hineingesteckt oder an das Filtermaterial angeleimt werden. Das Filtermaterial kann nämlich in diesem Fall völlig geradlinig gehalten sein. Es ist auch möglich, die Versteifungselemente am Filtermaterial festzuschweissen oder -zunieten, vorausgesetzt, dass sich das Filtermaterial für diese Methoden eignet. Diese letztgenannten Methoden liegen somit im Rahmen des Erfindungsgedankens. Erfindungsgemäss wird dann den Versteifungselementen ihre vorgesehene Form vermittelt, indem sie nach der Anbringung am Filtermaterial in die gewünschte Form, z.B. Wellen-, Zickzack- oder Bogenform, gebogen werden. Dies kann durch herkömmlichen Biegemethoden oder durch Einführen von Spreizvorrichtungen in die Filterbeutel geschehen, wie später beschrieben wird.

Das Filtermaterial mit den fertiggeformten Versteifungselementen kann schnell und einfach am Kassettenrahmen anmontiert werden. Durch die Spangen wird das Filtermaterial in Querrichtung an den Stirnwandteilen befestigt. Die Filterbeutel werden sehr wirksam aufgespannt, wenn die Spangen am Bodenbalken an den Befestigungspunkten des Filtermaterials festgehakt werden.

Beim Abmontieren des Filtermaterials vom Kassettenrahmen wird es zuerst von den Spangen abgehakt und dann gelöst. Es kann dann mit den Versteifungselementen weggeworfen werden. Da die Versteifungselemente sehr billig in der Herstellung sind, eignen sie sich für einmalige Anwendung. Wenn sie aus zerstörbarem Material wie Kunststoff hergestellt sind, können sie zusammen mit dem Filtermaterial vernichtet werden, was von grossem Vorteil ist, wenn der Filter zur Reinigung von Gasen angewendet wurde, die mit für die Umwelt gefährlichem Staub durchsetzt sind.

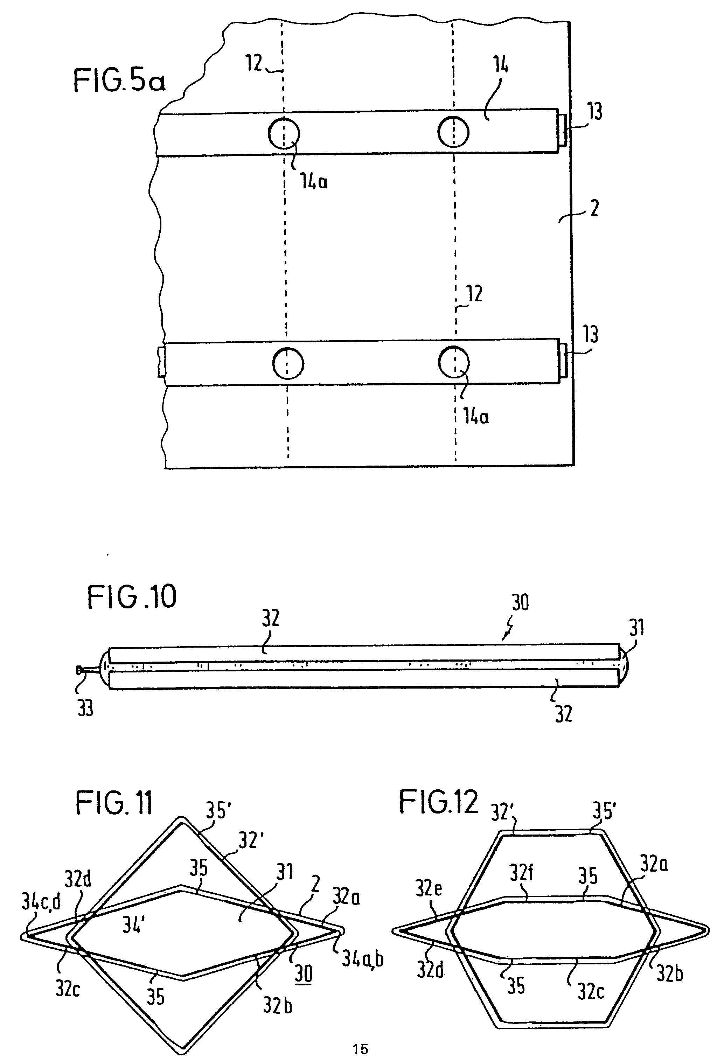

Fig. 10 zeigt ein Spreizelement in Form eines Aufblasbaren Druckelements 30. Dieses besteht aus einem Langgestreckten Schlauchkörper 31, an dessen Aussenseite steife Druckplatten 32 angeordnet sind. Die Druckplatten sind längs ihrer Seitenkanten bewegbar miteinander verbunden. Zweckmässig bilden die Druckplatten mit dem Schlauchkörper 31 eine körperliche Einheit. Wenn die Schlauchkörper aus Gummimaterial bestehen, kann das Druckelement durch Vulkanisieren hergestellt sein. Der Schlauchkörper 31 hat ferner einen Nippel 33, um ihn an eine Druckluftquelle anschliessen sowie entlüften zu können.

Fig. 11 zeigt im Schnitt die Stellung des Druckelements 30 in einem Filterbeutel vor sowie nach Expansion des Schlauchkörpers 31. Das den Filterbeutel bildende Filtermaterial 2 umgibt das Druckelement 30. Dieses Druckelement hat vier Druckplatten 32 a,b,c,d, von welchen die Druckplatten 32a und b längs ihrer Seitenkanten 34a, b und die Druckplatten 32c und d längs deren Seitenkanten 34c und d beweglich miteinander verbunden sind.

Neben den Seitenkanten 34a und b ist der nächstliegende Filterbeutel angeordnet (nicht gezeigt). Unter Aufblasen des Schlauchkörpers 31 gelangt das Druckelement aus seiner ursprünglichen Stellung in seine aufgeweitete Endstellung, die in Fig. 11 mit den Bezugszeichen 32', 34' gekennzeichnet ist. Mit dem dabei gleichzeitig erfolgenden Aufweiten des Filterbeutels werden die am Filtermaterial angebrachten ursprünglich geradlinigen Versteifungselemente in die gewünschte Form gebogen.

Bei der in Fig. 12 gezeigten Ausführungsform hat das Druckelement sechs Druckplatten 32a bis f, von welchen die Platten 32a, b und c einerseits und die Platten 32d, e und f andererseits an ihren Seitenkanten bewegbar miteinander verbunden sind. In aufgeblasener und aufgeweiteter Stellung (gezeigt in Fig. 12 mit Bezugsziffer 32') nimmt das Druckelement 30 im Querschnitt die Form eines Sechsecks an, wobei dem Versteifungselement 13 entsprechende Form gegeben wird. Sowohl aus Fig. 11 als auch aus Fig. 12 geht hervor, dass zwischen einigen Druckplatten ein plattenloser Schlauchbereich 35, 35' vorgesehen ist, der eine freie Ausdehnung der Teile des Druckelements ermöglicht, um bei der Herstellung des Filtermaterials entstehende Abmessungsunterschiede ausgleichen zu können.

Wie erwähnt kann die Formgebung der Versteifungselemente durch Aufblasen der in die Filterbeutel eingeführten Druckelemente 30 durchgeführt werden. Dazu werden die Druckelemente mit Hilfe ihrer Nippel 33 an eine Druckluftquelle angeschlossen. Mehrere Filterbeutel können hintereinander mit ein und demselben Druckkörper aufgeweitet werden, der vor dem Entfernen aus dem einen Beutel und zum Einbringen in den nächsten Beutel entleert (evakuiert) werden muss. Vorzugsweise werden aber mehrere Druckelemente (mindestens drei) zur Verformung der Versteifungselemente verwendet. Es kann sogar zweckmässig sein, genauso viele Druckelemente wie Filterbeutel in einer Filterreihe zu verwenden. Diese können nacheinander zum Aufblasen gebracht werden, so dass ein aufgeblasenes Druckelement die Aufspannung des benachbarten Filterbeutels erleichtert. Mit Vorteil kann ein Gegendruck bzw. ein Gegendruckorgan zwischen den Filterbeuteln in Wirkung gebracht werden, um bei deren Aufspannung ein Knicken bzw. Biegen des bzw. der Versteifungselemente zu erleichtern und um die Druckausübung auf das Filtermaterial zu vermindern.

## Patentansprüche

1. Vorrichtung für Gewebefilter, bei welchem das Filtermaterial (2) in einen aus einem Rahmenteil (4), Stirnwandteilen (5) und einem Bodenbalken (6) bestehenden Kassettenrahmen (3) eingespannt ist, der in ein Filtergehäuse einsetzbar ist, und mit einer oder mehreren Reihen (7, 8) von Filterbeuteln (9) ausgebildet ist, welche Kanäle für das gereinigte Gas bilden und an ihrem unteren Ende (10) geschlossen und an ihrem oberen Ende (11) zur Bildung einer Reingasöffnung und einer Abdichtung zum Reingaskanal des Filtergehäuses im Rahmenteil (4) durch Versteifungselemente aufgespannt sind, dadurch gekennzeichnet, dass die Versteifungselemente (13) längliche Gestalt haben und über die Länge bzw. Höhe der Filterbeutel in verschiedenen Höhen und längs der Filterreihen (7, 8) quer zu den Filterbeuteln (9) jeder Filterreihe an den Beutelaussenseiten angebracht sind und diesen länglichen Versteifungselementen Bogen-, Wellen- oder Zickzackform gegeben ist, und die Versteifungselemente (13) mit Mitteln (15, 16) zum federnden Einspannen des Filtermaterials (2) an den Stirnwandteilen (5) und dem Bodenbalken (6) des Kassettenrahmens (3) zusammenwirken.

2. Vorrichtung nach Anspruch 1, dadurch gekennzeichnet, dass die länglichen Versteifungselemente (13) so beschaffen sind, dass sie in im wesentlichen geradliniger Form am Filtermaterial (2) angebracht und anschliessend in die gewünschte ungeradlinige Form gebogen werden können, in der sie die Filterbeutel in der aufgespannten Form halten.

3. Vorrichtung nach Anspruch 1, dadurch gekennzeichnet, dass die Versteifungselemente (13) zueinander versetzt auf jeder Seite der Filterbeutel (9) in einer Filterreihe (7, 8) angebracht sind.

4. Vorrichtung nach Anspruch 1, dadurch gekennzeichnet, dass die Versteifungselemente (13) durch Streifen oder Bänder (14) am Filtermaterial (2) befestigt sind, welche durch Nähte oder Leimfugen am Filtermaterial befestigt sind.

5. Vorrichtung nach Anspruch 4, dadurch gekennzeichnet, dass die Streifen oder Bänder (14) über den die Filterbeutel (9) voneinander trennenden Nähten (12) mit Löchern (14a) versehen sind.

6. Vorrichtung nach Anspruch 1, dadurch gekennzeichnet, dass die Versteifungselemente (13) durch Leimfugen am Filtermaterial angebracht sind.

7. Vorrichtung nach Anspruch 1, dadurch gekennzeichnet, dass die Versteifungselemente (13) auf der Rohgasseite des Filtermaterials (2) angebracht sind.

8. Vorrichtung nach Anspruch 1, dadurch gekennzeichnet, dass die Versteifungselemente (13) auf der Reingasseite des Filtermaterials (2) angebracht sind.

9. Vorrichtung nach Anspruch 1, dadurch gekennzeichnet, dass die Versteifungselemente (13) rechteckige Querschnittsfläche haben.

10. Vorrichtung nach Anspruch 1, dadurch gekennzeichnet, dass die Versteifungselemente (13) aus Metall bestehen.

11. Vorrichtung nach Anspruch 1, dadurch gekennzeichnet, dass die Versteifungselemente (13) aus Kunststoff bestehen.

12. Vorrichtung nach Anspruch 1, dadurch gekennzeichnet, dass die Ausspannmittel (13) bei Anbringung am Filtermaterial (2) eine im wesentlichen gerade Form haben oder in eine solche Form bringbar sind und nach Anbringung am Filtermaterial ihre gewünschte Endform annehmen.

13. Vorrichtung nach Anspruch 1, bei der das Filtermaterial (2) zwei Fitlerreihen (7, 8) besitzt, dadurch gekennzeichnet, dass zum Einspannen des Filtermaterials an den Stirnwandteilen (5) und dem Bodenbalken (6) des Kassettenrahmens Spangen oder Bügel (16) vorgesehen sind, die mit einem das Stirnwandteil bzw. den Bodenbalken umschliessenden Mittelteil (17) ausgebildet sind, von welchem zwei mit Hakenteilen (19) versehene federnde Arme (18) in entgegengesetzten Richtungen ragen und in einem am Filtermaterial der betreffenden Filterreihe (7, 8) angebrachten Befestigungspunkt zu befestigen sind.

14. Vorrichtung nach Anspruch 13, dadurch gekennzeichnet, dass die Befestigungspunkte aus Ösen (15) oder einer Schnur bzw. einem Band (20) bestehen, das stellenweise an der Seiten- und der Bodenwand der Filterreihe angebracht ist.

15. Verfahren zur Herstellung einer Vorrichtung nach einem oder mehreren der Ansprüche 1 bis 14, dadurch gekennzeichnet, dass die Versteifungselemente zunächst am Filtermaterial angebracht und dann am Filtermaterial in eine die Filterbeutel ausspannende, z.B. Wellen-, Bogen- oder Zickzackform, gebracht werden.

16. Verfahren nach Anspruch 15, dadurch gekennzeichnet, dass in den oder die Filterbeutel (9) ein aufblasbares und dabei den Beutel aufweitendes Druckelement (30) eingesetzt und anschliessend im Filterbeutel aufgeblasen wird, wodurch das Versteifungselement in seine gewünschte, den Filterbeutel ausspannende Form gebracht wird, worauf das Druckelement entleert und aus dem Filterbeutel herausgenommen wird.

17. Verfahren nach Anspruch 16, dadurch gekennzeichnet, dass mindestens zwei Druckelemente (30) in zwei benachbarte Filterbeutel eingesetzt und unter Anwendung eines Gegendruckes im Bereich zwischen den beiden Filterbeuteln aufgeblasen werden.

18. Druckelement zur Durchführung des Verfahrens nach Anspruch 16, dadurch gekennzeichnet, dass es aus einem aufblasbaren Schlauchkörper (31) mit an seiner Aussenseite angeordneten Druckplatten (32) besteht, die entlang ihrer Seitenränder mit der jeweils benachbarten Druckplatte beweglich verbunden sind.

19. Druckelement nach Anspruch 18, dadurch gekennzeichnet, dass es mit vier Druckplatten (32) ausgestattet ist.

20. Druckelement nach Anspruch 18, dadurch gekennzeichnet, dass sein Schlauchkörper (31) und seine Pressplatten (32) eine bauliche Einheit bilden.

**Revendications**

1. Dispositif pour filtres en tissu où le matériau de filtrage (2) est serré dans un cadre de cartouche (3) qui se compose d'une partie d'encadrement (4), de parties de paroi frontale (5) et d'une barre du bas (6), que l'on peut disposer dans un boîtier de filtrage, qui comprend une ou plusieurs rangées (7, 8) de sacs de filtration (9) qui forment des canaux pour le gaz propre et sont fermés à leur extrémité inférieure (10) et sont maintenus ouverts, à leur extrémité supérieure (11), au moyen d'éléments de raidissement, pour la formation d'une ouverture de gaz propre et d'une étanchéité pour le canal de gaz propre du boîtier de filtrage dans la partie d'encadrement (4), caractérisé en ce que les éléments de raidissement (13) ont une configuration allongée et sont installés sur la longueur ou, respectivement, la hauteur des sacs de filtration à diverses hauteurs et le long des rangées de filtres (7, 8) transversalement aux sacs de filtration (9) de chaque rangée de filtres sur le côté externe des sacs, et ces éléments allongés de raidissement reçoivent une forme ondulée d'arcs, de zigzag, et les éléments de raidissement (13) coopèrent avec des moyens (15, 16) pour la fixation par serrage élastique du matériau de filtrage (2) sur les parties de paroi frontale (5) et la barre du fond (6) du cadre de cartouche (3).

2. Dispositif selon la revendication 1, caractérisé en ce que les éléments allongés de raidissement (13) sont formés de façon qu'ils soient installés en forme principalement rectiligne sur le matéériau de filtration (2) pour être ensuite courbés à la forme souhaitée non rectiligne à laquelle ils maintiennent les sacs de filtration sous forme ouverte.

3. Dispositif selon la revendication 1, caractérisé en ce que les éléments de raidissement (13) sont décalés les uns des autres de chaque côté des sacs de filtration (9) dans une rangée de filtres (7, 8).

4. Dispositif selon la revendication 1, caractérisé en ce que les éléments de raidissement (13) sont fixés sur le matériau de filtrage (2) par des bandes ou rubans (14) qui sont fixés par des coutures ou de la colle sur le matériau de filtrage.

5. Dispositif selon la revendication 4, caractérisé en ce que les bandes ou rubans (14) sont munis de trous (14a) sur les coutures (12) séparant les sacs de filtration (9) entre eux.

6. Dispositif selon la revendication 1, caractérisé en ce que les éléments de raidissement (13) sont montés sur le matériau de filtrage par des joints collés.

7. Dispositif selon la revendication 1, caractérisé en ce que les éléments de raidissement (13) sont montés du côté gaz brut du matériau de filtrage (2).

8. Dispositif selon la revendication 1, caractérisé en ce que les éléments de raidissement (13) sont montés du côté gaz propre du matériau de filtrage (2).

9. Dispositif selon la revendication 1, caractérisé en ce que les éléments de raidissement (13) ont une section transversale rectangulaire.

10. Dispositif selon la revendication 1, caractérisé en ce que les éléments de raidissement (13) sont en métal.

11. Dispositif selon la revendication 1, caractérisé en ce que les éléments de raidissement (13) sont en matière synthétique.

12. Dispositif selon la revendication 1, caractérisé en ce que les éléments de raidissement (13) ont, à leur installation sur le matériau de filtrage (2), une forme principalement droite ou bien ils peuvent y être amenés sous une telle forme et, après installation sur le matériau de filtrage, ils prennent leur forme finale souhaitée.

13. Dispositif selon la revendication 1, où le matériau de filtrage (2) possède deux rangées de filtres (7, 8), caractérisé en ce que pour la fixation par serrage de filtrage sur les parties de paroi frontale (5) et les barres du bas (6) du cadre de la cartouche, on prévoit des agrafes ou étriers (16) qui sont formés avec une partie médiane (17) entourant la partie de paroi frontale ou, respectivement, la barre du bas, d'où deux bras à ressort (18) pourvus de parties formant crochets (19) font saillie en directions opposées et sont à fixer à un point de fixation installé sur le matériau de filtrage de la rangée de filtres correspondante (7, 8).

14. Dispositif selon la revendication 13, caractérisé en ce que les points de fixation sont formés d'anneaux (15) ou d'un cordon ou, respectivement, d'une bande (20), fixé par endroits sur la paroi latérale de fond de la rangée de filtres.

15. Procédé de fabrication d'un dispositif selon l'une quelconque des revendications 1 à 14, caractérisé en ce que les éléments de raidissement sont d'abord fixés sur le matériau de filtrage puis sont amenés, sur le matériau de filtrage, à une configuration ouvrant les sacs de filtration, par exemple en forme ondulée, d'arcs ou de zigzag.

16. Procédé selon la revendication 15, caractérisé en ce que dans le ou les sacs de filtration (9) est inséré un élément de pression (30) pouvant être gonflé et élargissant ainsi le sac, et en ce que cet élément est gonflé dans ledit sac de filtration, ainsi l'élément de raidissement est amené à sa forme souhaitée ouvrant le sac de filtration et, ensuite, l'élément de pression est vidé et est retiré du sac de filtration.

17. Procédé selon la revendication 16, caractérisé en ce qu'au moins deux éléments de pression (30) sont introduits dans deux sacs de filtration voisins et sont gonflés avec application d'une contre-pression à la partie entre les deux sacs de filtration.

18. Elément de pression pour la mise en œuvre du procédé selon la revendication 16, caractérisé en ce qu'il se compose d'un corps flexible (31) gonflable avec des plaques de pression (32) disposées sur son côté externe et reliées mobiles le long de leurs bords latéraux, avec les plaques de pression voisines.

19. Elément de pression selon la revendication 18, caractérisé en ce qu'il est équipé de quatre plaques de pression (32).

20. Elément de pression selon la revendication 18, caractérisé en ce que son corps flexible (31) et ses plaques de pression (32) forment une unité.

**Claims**

1. Device for web filters in which the filter material (2) is stretched in a cassette frame (3) consisting of a frame part (4), end wall parts (5) and a floor beam (6), which is insertable in a filter housing and is formed with one or more rows (7,8) of filter bags (9) which form channels for the purified gas and which on their lower end (10) are closed and on their upper end (11) are stretched out by means of stiffening elements for the formation of a purified gas opening and for sealing to the purified gas channel of the filter housing in the frame part (4), characterised in that the stiffening elements (13) have an elongated shape and are positioned on the bag outlet sides along the length and/or height of the filter bags at various heights and longitudinally of the filter rows (7,8) transversely of the filter bags (9) of each rows filter row, and these elongate stiffening elements are given a bow-shape, wave-shape, or zigzag-shape and the stiffening elements (13) cooperate with means (15, 16) for the resilient stretching of the filter material (2) on the side wall parts (5) and the floor beams (6) of the cassette frame (3).

2. A device according to claim 1, characterised in that the elongate stiffening elements (13) are so arranged that they are positioned on the filter material (2) in essentially rectilinear form and subsequently can be bent into the desired nonlinear form in which they hold the filter bags in the stretched shape.

3. A device according to claim 1, characterised in that the stiffening elements (13) are positioned in a filter row (7, 8), mutually staggered on each side of the filter bag (9).

4. A device according to claim 1, characterised in that the stiffening elements (13) are secured by strips or bands (14) on the filter material (2) which are secured by seams or glue joints on the filter material.

5. A device according to claim 4, characterised in that the strips or bands (14) are provided with holes (14a) through the seams (12) which separate the filter bags (9) from one another.

6. A device according to claim 1, characterised in that the stiffening elements (13) are positioned on the filter material by means of glue joints.

7. A device according to claim 1, characterised in that the stiffening elements (13) are positioned on the dirty gas side of the filter material (2).

8. A device according to claim 1, characterised in that the stiffening elements (13) are positioned on the clean gas side of the filter material (2).

9. A device according to claim 1, characterised in that the stiffening elements (13) have rectangular cross-sectional surfaces.

10. A device according to claim 1, characterised in that the stiffening elements (13) consist of metal.

11. A device according to claim 1, characterised in that the stiffening elements (13) consist of synthetic material.

12. A device according to claim 1, characterised in that the extending means (13) have upon application to the filter material (2) a substantially straight form, or can be brought to such a form, and assume their desired final form after application to the filter material.

13. A device according to claim 1 in which the filter material (2) possesses two filter rows (7, 8), characterised in that for stretching of the filter material on the front wall parts (5) and the floor beam (6) of the cassette frame, clips or straps (16) are provided which are constructed with a center part (17) which encloses the front wall part and/or the floor beam, from which center part two resilient arms (18) provided with hook parts (19) extend in opposed directions and are for fastening at a fastening point mounted on the filter material of the relevant filter row (7, 8).

14. A device according to claim 13, characterised in that the fastening points consist of ears (15) or a cord and/or a tape (20) which is mounted at intervals on the side walls and the base wall of the filter row.

15. A method for the manufacture of a device according to one or more of claims 1 to 14, characterised in that the stiffening elements are first mounted on the filter material and are then brought on the filter material to for example a wave-shape, bow-shape, or zigzag-shape which stretches the filter bag.

16. A method according to claim 15, characterised in that a pressure element (30), which is inflatable in order thereby to expand the bag, is positioned in the bag or bags (9) and then is inflated in the filter bag, whereby the stiffening element is brought to its desired shape stretching the filter bag, or upon the pressure element is deflated and removed from the filter bag.

17. A method according to claim 16, characterised in that at least two pressure elements (30) are inserted in two adjacent filter bags and are inflated with use of a counterpressure in the region between the two filter bags.

18. A pressure element for carrying out the method according to claim 16, characterised in that it consists of an inflatable tube body (31) having pressure plates (32) arranged on its outer side which are movably connected along their side edges with the respective neighboring pressure plate.

19. A pressure element according to claim 18, characterised in that it is provided with four pressure plates (32).

20. A pressure element according to claim 18, characterised in that its tube body (31) and its pressure plates (32) form a constructional unit.

0 037 498

FIG.1

FIG.2

FIG.3

FIG.4    FIG.5

FIG.6

FIG.7

FIG.8

FIG.9

**FIG.5a**

**FIG.10**

**FIG.11**

**FIG.12**